# EUROPEAN PATENT SPECIFICATION

(11) **EP 3 233 445 B1**
(45) Date of publication and mention of the grant of the patent: **16.02.2022**
(21) Application number: 15813542.6
(22) Date of filing: 17.12.2015
(51) Int. Cl.: B29D 11/00

(54) **METHODS AND APPARATUS FOR MANUFACTURE OF OPHTHALMIC LENSES**
VERFAHREN UND VORRICHTUNG ZUR HERSTELLUNG VON OPHTHALMISCHEN LINSEN
PROCÉDÉ ET APPAREIL POUR LA FABRICATION DE LENTILLES OPHTALMIQUES

(30) Priority: 19.12.2014 GB 201422765
(43) Date of publication of application: 25.10.2017
(73) Proprietor: CooperVision International Limited, Fareham PO15 5RL (GB)
(72) Inventor: GIBSON, John Robert, Eastleigh Hampshire SO53 4LY (GB); COOK, Terence Michael, Beccles Suffolk NR34 7TE (GB); COOK, James Bryan, Beccles Suffolk NR34 7TE (GB)
(74) Representative: Abel & Imray LLP
(86) International application number: PCT/GB2015/054048
(87) International publication number: WO 2016/097736

(56) References cited:
- JP-A- H04 361 010
- US-A- 4 909 969
- US-A1- 2004 061 246
- US-A1- 2010 264 556
- US-A1- 2014 103 552

## Description

The present invention concerns improvements in and relating to the manufacture of ophthalmic lenses. More particularly, the present invention concerns methods and apparatus for removing a contact lens from a lens mold portion.

### BACKGROUND OF THE INVENTION

One method of manufacturing ophthalmic lenses is by cast molding. In a cast molding process a lens precursor material is introduced into a lens-shaped cavity formed between lens mold portions. The lens precursor material is then cured and/or polymerized, thereby forming an ophthalmic lens. It is then necessary to remove the lens from the mold assembly. First the two mold portions are separated (known as demolding). Typically, following demolding, the lens remains in contact with one of the lens mold portions, often due, at least in part, to the material properties of the lens and the lens mold. Consequently, the next step in the cast molding process involves removing the lens from the mold portion (known as delensing).

Lenses at this stage of the manufacturing process are easily damaged, being susceptible to surface damage and tearing which renders the lens unusable. Moreover, the optical performance of a lens is strongly dependent on its shape. Therefore, any stretching of the lens during the demolding sequence may affect the optical performance of the lens, and therefore impact the ability of the lens to correct vision. Thus, in order to be effective, any manufacturing method must minimize the risk of damage to, or deformation of, the lens during removal from the lens mold portion.

As well as being easily damaged, the lens may be very flexible, i.e., the lens may have a very low elastic modulus. This is particularly true in the case of silicon hydrogel contact lenses but also applies to other ophthalmic lenses. In the case of a highly flexible lens, deformation of the mold carrying the lens may simply result in deformation of the lens, rather than successful delensing, because the lens does not favor its natural shape in the same way as a more rigid lens. Consequently, a more radical deformation may be required to detach the lens from the mold, thereby increasing the risk of damage to the lens or failure of the mold.

Methods for removing a lens from a mold portion may be categorized as mechanical methods and non-mechanical methods.

One known non-mechanical method of removing a lens from a mold portion is to soak the lens and the mold portion in a liquid solution such that the lens floats off of the mold. However, once hydrated or otherwise swollen with liquid, the lens is much more difficult to handle, which complicates downstream manufacturing processes. Such methods also significantly increase production time because of the length of time required for the lens to absorb the necessary amount of liquid.

U.S. Pat. No. 7,811,483 describes mechanical methods and systems for delensing ophthalmic lenses by using gas. A mold portion carrying a lens is radially compressed, and a gas, such as air, is directed towards the lens. The radial compression of the mold portion provides a void between the lens and the mold portion near the edge of the lens, which allows the gas to lift the edge of the lens. However, deforming the mold from the side can cause the lens to come off of the mold asymmetrically, resulting in difficulties in downstream manufacturing processes and increased risk of damage.

U.S. Pat. No. 8,105,070 also discloses the use of gas jets to lift the edge of a lens carried by a mold portion. This document describes applying a force in a first direction to diametrically opposed portions of the outer flanges of the mold while applying a force in a second, opposite direction, to the center of the mold, such that the mold is peeled away from the edges of the lens and can then be lifted by the gas jets.

U.S.Pat. No. 8,038, 912 describes a method of delensing a lens by locating a circular shear ring against the lens-side surface of the mold. A plunger is then pressed against the back surface of the mold such that the mold is pressed between the shear ring and the plunger. The diameter of the plunger is less than that of the shear ring so the edge of the mold is peeled away from the lens as the plunger is pressed against the back of the mold.

The methods described above can be used to remove lenses from mold portions. However, severe deformation of the mold over a limited radius, as required in the above methods, may result in fracturing of the mold, thereby contaminating the lens and rendering it unusable. The degree of deformation also increases the risk of defects being produced on the lens surface. Consequently, it is advantageous to provide improved methods of removing an ophthalmic lens from a mold portion, which result in a lower rate of rejection of lenses because of damage caused by the delensing process.

US 2004/061246 describes a method and apparatus for releasing an ophthalmic lens in the dry state from an associated anterior mold part in which the lens was cast and is adhered by application of a first force which releases the periphery of the lens followed by application of a further second force which releases the center of the lens.

US 2014/103552 describes a lens molding apparatus (100) including: a mold (1) having a transfer surface (1a) for transferring a predetermined lens shape to a resin material; a mold (2) having a transfer surface (2a) for transferring a predetermined lens shape to the resin material and a support device (3) for moving the mold (1). The apparatus further includes a heating device (4) curing the resin material so as to form a lens, the resin material having been supplied between the transfer surface (1a) and the transfer surface (2a); and an ultrasonic vibrator (5) applying vibration from a side surface of the mold (1 or 2) so as to form a gap at least at a part between the transfer surface (1a or 2a) and the lens.

JP H04 361010 describes a method for releasing a compound lens from a molding die safely after it is molded. A voltage with a frequency, by which the shape of the molding surface 12 of a molding die 10 is deformed in the same manner as the resonance frequency of the molding die 10, is applied to a vibration generating means 14 by a highfrequency generating means in the molding die 10. In the molding die 10 a resonator 13, the vibration generating means 14 and a mold nose section 11 with the molding surface 12 are clamped and mounted in series by a bolt 15. The molding surface 12 of the molding die 10 is elastically deformed by applying voltage, thus generating displacement between the molded resin layer of a compound lens fast stuck to the molding surface 12 and the molding surface 12 of the molding die 10, then releasing the resin layer.

US 2010/264556 describes contact lens delensing methods that include using a gas to facilitate separation of a polymerized contact lens product from a contact lens mold member. The contact lens mold member is compressed to deform a portion of the mold member, and gas, such as air, is directed toward the polymerized contact lens product in contact with the portion. The contact lens mold member can be compressed as the mold member and lens product rotate. A vacuum device can be used to separate the polymerized contact lens product from the contact lens mold member after compressing the portion of the mold member and directing the gas towards the mold member. Delensing systems used to practice these are also described.

### SUMMARY OF THE INVENTION

The present invention, in a first aspect, provides a method of removing a contact lens from a lens mold portion carrying a contact lens, according to independent claim 1.

The invention is based on the realization that repeated reciprocal motion of a region of the ophthalmic lens can provide detachment of the mold at lower levels of mold deformation than are achieved using a single movement in one direction, thereby reducing the risk of lens defects and mold breakage.

The step of removing the lens from the lens mold portion may be referred to as a delensing step. Thus, a delensing step may comprise removing a given contact lens from a mold portion.

Reciprocal displacement is a repetitive back-and-forth motion. The displacement can be linear. Reciprocal displacement comprises a plurality of cycles (for example, at least 2, at least 3, or at least 5 cycles), each cycle comprising motion in a first direction, followed by motion in a second, opposite direction.

The invention, in certain aspects, relates to a method of manufacturing a contact lens including cast molding a lens in a mold assembly. The method can include a step of providing a lens mold assembly including a lens-shaped cavity formed by two or more lens mold portions. The method may comprise providing a lens precursor material in the lens-shaped cavity. The mold portions can be coupled together. The method can comprise a step of curing the lens precursor material. Alternatively, or additionally, the method comprises a step of polymerizing the lens precursor material. Thus, a lens may be formed in the lens-shaped cavity. The method can comprise a step of separating the lens mold assembly into its constituent lens mold portions (demolding). Once the mold assembly has been separated, i.e., following the demolding step, the lens is carried by a mold portion.

After the mold assembly has been separated, the method can comprise a step of removing the contact lens from the lens mold potion carrying the lens (delensing), as described herein. After delensing, the lens can be subjected to other processing steps. For example, the method can include a hydrating or fluid-swelling step. The hydrating or swelling step can be carried out after the delensing step. The lens can then be inspected, packaged, and sterilized, as understood by persons of ordinary skill in the art.

The step of curing and/or polymerizing the lens precursor material can include exposing the mold assembly to ultra-violet light. The step of curing and/or polymerizing the lens precursor material can include heating the mold assembly.

The mold sections can be formed by injection molding. The mold sections can comprise polymeric materials. For example, the mold sections can comprise thermoplastic polymeric materials, in particular, amorphous polymeric materials. The mold sections can comprise materials such as polystyrene, polycarbonate, acrylonitrile/butadiene/styrene compositions, cyclic olefin co-polymers, acrylics, and/or polysulfone. The mold sections can comprise semicrystalline resins such as acetal, polypropylene, polyethylene, nylon, polyethylene terephthalate, polyether ether keton, other polyolefins, and liquid crystal polymers. The mold sections can comprise polyethylene vinyl alcohol (EVOH), for example, injection molded EVOH.

The lens is of a non-hydrated and/or non-fluid-swollen lens type. Alternatively, the lens can be removed from the mold portion before being hydrated and/or fluid-swollen. The lens can be non-hydrated and/or non-swollen after curing until it has been removed from the mold portion.

The lens precursor material can be a polymerizable composition. The lens precursor material can comprise a monomer mixture. The precursor material can include a silicone-containing monomeric component.

Ophthalmic lenses typically comprise an optic portion that provides vision correction. This can be located in the center of the lens. The lens can comprise a peripheral portion that is located radially outside the optic portion. The peripheral portion can circumscribe the optic portion. The peripheral portion can be annular.

The lens mold assembly can be formed from two lens mold portions. Each mold portion can include a lens-shaped region. The lens-shaped region can include a surface that defines a surface of the lens. Each mold portion can include a flange region circumscribing the lens-shaped region. One of the mold portions can have a convex lens-shaped region that defines a posterior surface of the lens. Such a mold portion can be referred to as a male mold portion. One of the mold portions can have a concave lens-shaped region that defines an anterior surface of the lens. Such a mold portion can be referred to as a female mold portion. The mold portions can be configured such that, when placed together, the lens-shaped regions of the mold portions form a lens-shaped cavity. The mold portions can be configured such that, when placed together, one or more regions of the surface of the flanges of the assembled mold sections are in contact with one another.

The lens-shaped region of the mold portion(s)can include an optical surface that defines the optic portion of a lens. This region of the mold portion can be referred to as the optic region of the mold portion.

The mold portions can be "universal" mold portions. Thus, a single mold portion can have both a convex lens-shaped region and a concave lens-shaped region on opposite sides such that two universal mold portions can be assembled together into a mold.

The lens precursor material is can be placed on the concave surface of a first mold portion. A second mold portion can be placed in contact with the first mold section to form a lens-shaped cavity with the lens precursor material contained therein.

The contact lens can be a cast-molded lens.

A contact lens applicable to the invention can be a hydrogel lens, for example, a lens made of a silicone hydrogel material. The lens can be an extended wear silicone hydrogel contact lens and/or a daily wear silicone hydrogel contact lens.

The amplitude of the reciprocal displacement can be defined as the distance moved by the region of the mold portion in the first direction in a cycle. The distance moved in the first direction in a first cycle is not necessarily equal to the distance moved in the first direction in a second, subsequent, cycle. That is to say, the amplitude of the reciprocal displacement can vary from cycle to cycle. The amplitude can be at least 0.5 mm, for example, at least 1.5 mm. The amplitude can be less than 7 mm. The amplitude can preferably be about 5 mm. The initial amplitude can be 1.5 mm. The maximum amplitude can be 5 mm. Thus, the amplitude of the reciprocal displacement can vary with respect to time. The method of removing the contact lens from the lens mold portion can comprise varying the amplitude of the reciprocal displacement with respect to time. The distance moved in the first direction in an earlier cycle can be less than the distance moved in the first direction in a later cycle. The distance moved in the first direction in the first cycle can be less than the distance moved in the first direction in the second cycle. Thus, the amplitude of the displacement can increase with time. It has been found that gradually increasing the amplitude of the reciprocal displacement during delensing reduces the risk of the mold portion fracturing. Accordingly, the invention relates to molds and apparatus in which the amplitude of the reciprocal displacement in later cycles can be of an extent which would risk fracture of the mold portion if applied to the mold portion immediately without being preceded by lower amplitude cycles of displacement.

The amplitude of the reciprocal displacement can increase with time from an initial displacement to a maximum displacement during the delensing step. The amplitude of the reciprocal displacement during a subsequent delensing step can vary in substantially the same manner with respect to time as the amplitude varies in a previous step. The amplitude of the reciprocal displacement does not necessarily vary between every cycle in a delensing step. For example, a first set of cycles can all have a first amplitude. A second set of cycles can all have a second, different, preferably larger, amplitude. The first set of cycles can be followed by the second set of cycles during a single delensing step. There can be three cycles in a single delensing step. There can be more than three cycles in a single delensing step. For example, there can be four, five, or six cycles in a single delensing step. Each successive cycle can have a larger amplitude.

The displacement of the mold portions in accordance with aspects of the invention causes an edge portion of an ophthalmic lens to become detached from the mold portion. The displacement and the apparatus used for providing the displacement can be arranged so that the greatest displacement is applied to the mold portion in the region on which the edge of the contact lens is held. For example, the greatest displacement can be provided to an annular ring on the mold portion, which is in the region on which the contact lens is held. The displacement can be applied to the mold portion opposite the mold portion attached to the lens. For example, the lens can sit on the upper surface and the displacement can be applied from below.

A suction head can be used to remove the lens from the mold portion. A portion of the suction head can contact the lens. The suction head can be connected to a robotic arm. The robotic arm can move the suction head in three dimensional space, i.e,. in three orthogonal directions. Thus, the robotic arm can move a lens attached to the suction head from a first location to a second location that is spaced apart from the first location.

The method of removing the contact lens from the lens mold portion can comprise moving the suction head synchronously with the reciprocal motion of the mold portion. As a result of moving the suction head synchronously with the reciprocal motion of the mold portion, the lens carried by the mold portion is continually exposed to suction, thereby minimizing the risk of the lens being dislodged. Moving the suction head synchronously with the reciprocal motion of the mold portion can maintain a substantially constant distance between the suction head and the lens, even as the lens is displaced reciprocally during delensing.

The method of removing the contact lens from the lens mold portion can comprise blowing gas towards the edge portion of the contact lens. Gas can be directed towards a single location on the outer circumference of the lens. Gas can be directed towards a portion of the outer circumference of the lens. Gas can be directed towards a plurality of locations spaced circumferentially around the edge of the lens. Once the edge portion has been lifted, the gas can penetrate between the lifted edge portion and the mold portion, thereby facilitating the separation of the lens from the mold. The gas can be air. The gas can be blown towards the edge portion of the contact lens before reciprocal displacement of the mold portion begins. The gas can be blown towards the edge portion of the ophthalmic lens while the mold portion is being reciprocally displaced. The gas can be directed as a continuous stream of gas. The gas can be directed in a pulsatile manner. For example, the gas can be directed in a series of short pulses.

The gas can be blown towards the edge portion of the contact lens before the edge portion has become detached from the mold portion by the reciprocal displacement of the mold portion. The gas can be blown towards the edge portion of the contact lens after the edge portion has become detached from the mold portion.

According to the invention, there is provided a method of manufacturing a contact lens using lens mold portions, wherein the method comprises removing the ophthalmic lens from a lens mold portion in accordance with the first aspect of the invention.

According to a second aspect of the invention, there is provided an apparatus for removing a contact lens from a lens mold portion, according to independent claim 6. The reciprocating member can contact the mold portion on the side of the mold portion opposite the lens. Contact between the reciprocating member and the mold portion can be maintained during the reciprocal displacement.

The reciprocating member can move a first distance in a first direction and then the reciprocating member can move a second distance in a second direction that is opposite the first direction. The movement through the first distance followed by the movement through the second distance constitutes a cycle. The number of cycles, their timing, speed, amplitude, and variations thereof, may be as described above in reference to the first aspect of the invention.

The apparatus can comprise a clamp for clamping the mold portion in a fixed position on the platform. The clamp can act on the outer circumference of the mold portion. The clamp can contact a flange portion of the mold portion. The clamp can contact the flange on the same side of the mold portion on which the lens sits. The clamp can contact the flange portion around all, or the majority, of the circumference of the mold portion. The clamp can compress the outer circumference of the mold portion.

The clamp can define a circular aperture. In use, the circular aperture and the mold portion can be concentric. In use, the circular aperture and the lens can be concentric. The clamp can comprise a plate. The clamp can be a plate defining a circular aperture. The diameter of the circular aperture can be less than the diameter of the mold portion. The diameter of the circular aperture can be greater than the diameter of the optic region of the mold portion.

The reciprocating member comprises an end portion arranged to contact the retained lens mold portion so as to provide the reciprocal movement of the region of the mold portion. The reciprocating member comprises a non-planar end portion shaped to complement the mold portion. The end portion can be circular when viewed in plan. The end portion can be formed monolithically with the reciprocating member. The end portion can be cup-shaped. The end portion can be concave. The end portion can be convex. The diameter of the end portion can be less than the diameter of the circular aperture.

The reciprocating member is arranged such that in use the end portion contacts the center of the mold portion. The diameter of the end portion can be greater than the diameter of the optic portion of the mold.

The end portion of the reciprocating member and the circular aperture can define an annulus on the mold portion. The annulus can be the region of the mold located radially outside of the end portion of the reciprocating member but within the circular aperture. The annulus can be outside the optic portion of the mold portion.

The apparatus can further comprise a suction head wherein the suction head is arranged and configured such that in use the suction head is located on the side of the mold portion opposite the reciprocating member and moves substantially synchronously with said reciprocating member.

The suction head can comprise an end surface including at least one vacuum port. The end surface can be convex. In use, the negative pressure produced by the at least one vacuum port can be used to hold the lens against the end surface. The suction head can comprise a flexible contact element. The flexible contact element can be resilient. The flexible contact element can include the end surface. The flexible contact element can be made from an elastomeric material. The flexible contact element can be made from silicone rubber. The suction head is a vacuum head.

The apparatus can further comprise a robotic arm. The suction head can be attached to the robotic arm. The robotic arm can be arranged and configured to move the suction head substantially synchronously with the reciprocating member.

The apparatus can further comprise a blower arranged to blow air towards an edge of a lens attached to the mold portion.

The blower can comprise one or more air ducts. The blower can be arranged to move with the clamp. The blower can include one or more air ducts located within the clamp. The blower can include one or more air ducts attached to the clamp. The blower can include one or more air ducts located within the clamping plate.

The platform can comprise a recess in a substantially flat surface. The mold portion can sit within the recess.

The reciprocating member can pass through an aperture in the platform to contact the mold portion.

The apparatus can be used for delensing from a female mold portion. The platform can comprise a concave recess within a substantially flat surface. The reciprocating member can pass through an aperture in the center of the concave recess, to contact the mold portion.

The apparatus can include a controller to control the reciprocating member. The controller can be arranged and configured to move the reciprocating member through a predetermined number of cycles for each delensing step. The controller can be arranged and configured to move the reciprocating member until a control signal indicates the lens has been removed from the mold.

According to a third aspect of the invention, there is provided a delensing station comprising an apparatus for removing a contact lens from a lens mold portion in accordance with the second aspect of the invention.

The delensing station can be positioned adjacent to a conveyor for conveying mold portions to the delensing station for delensing. The conveyor can comprise a substantially flat surface containing a recess. The substantially flat surface can contain a plurality of recesses. The conveyor can be linear. The conveyor can comprise a turntable. The turntable can rotate to bring a recess into alignment with the delensing station. The turntable can rotate to bring a recess into alignment with the reciprocating member. The turntable can rotate to bring a recess into alignment with the clamp.

According to a fourth aspect of the invention, there is provided a manufacturing line for the production of contact lenses, wherein the manufacturing line comprises a delensing station in accordance with the third aspect of the invention.

The manufacturing line can comprise a curing station upstream of the delensing station. The lens precursor material contained within a mold assembly can be cured at the curing station.

The manufacturing line can comprise a demolding station upstream of the delensing station. The mold assembly can be separated into its constituent mold portions at the demolding station. The lens can be retained in the concave mold portion after the mold assembly is separated at the demolding station. The lens-carrying mold portion can be located in a recess in a conveyor for the demolding step. The demolding station can be located adjacent to the conveyor. The lens carrying mold portion can be transported between the demolding station and the delensing station by the conveyor.

The manufacturing line can comprise a hydrating station downstream of the delensing station. The lens can be hydrated at the hydrating station after it has been removed from the mold.

The manufacturing line can include a packaging station downstream of the hydrating station. The hydrated lens can be packaged at the packaging station.

Any features described with reference to one aspect of the invention are equally applicable to any other aspect of the invention, and vice versa.

### BRIEF DESCRIPTION OF THE DRAWINGS

Various embodiments of the invention will now be described, by way of example only, with reference to the accompanying schematic drawings, of which:
FIG. 1 is a schematic cross section of an apparatus for removing a lens from a mold portion according to a first exemplary embodiment of the invention;
FIG. 2 is a schematic plan view of a mold portion carrying a lens when positioned in the apparatus of FIG. 1;
FIG. 3 is a delensing station in accordance with a second exemplary embodiment of the invention;
FIG. 4 is a flow chart depicting the process for manufacturing a cast-molded lens according to a first exemplary method of the invention; and
FIG. 5 is a flow chart showing the step of removing a lens from a mold portion, in accordance with the process shown in FIG. 4, in more detail.

### DETAILED DESCRIPTION

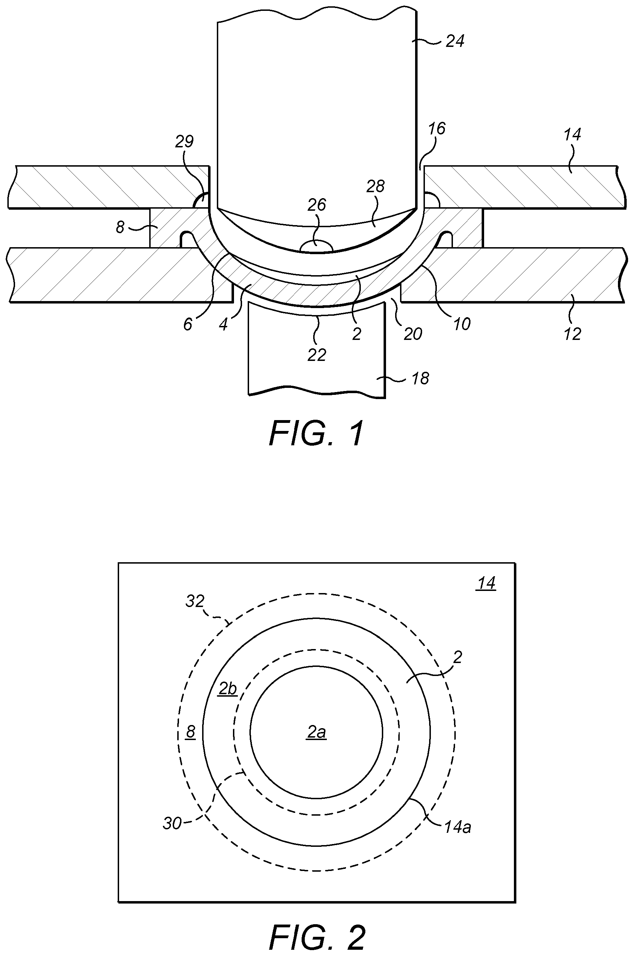

FIG. 1 shows, in cross-section, an ophthalmic lens 2 carried by a mold portion 4. In embodiments of the invention ophthalmic lens 2 is a contact lens. Mold portion 4 has a concave lens-shaped region 6 and peripheral flanges 8. Ophthalmic lens 2 is carried in concave lens-shaped region 6 on the top side of the mold portion. Mold portion 4 rests in a recess 10 formed in a flat horizontal surface 12. A clamping plate 14 contacts the top surface of flanges 8. Clamping plate 14 has a circular aperture 16 located concentrically with mold portion 4. Air vents 29 are located on the portion of plate 14 forming aperture 16. A reciprocating member 18 is located beneath a recess aperture 20 formed in the center of the bottom of concave recess 10. End portion 22 of reciprocating member 18 is concave and, in this example, matches the shape of the underside of mold portion 4. A vacuum head 24 is positioned above lens 2. The end of vacuum head 24 comprises a convex contact element 28 and includes a vacuum port 26.

In use, end portion 22 of reciprocating member 18 contacts the bottom of mold 4 via recess aperture 20. End portion 22 moves upwards, thereby exerting a force on the bottom of mold 4 and vertically displacing a central region of the mold (see FIG. 2). End portion 22 then moves downwards while maintaining contact with the bottom of mold 4 such that the displaced region of the mold moves back towards its original position. In use, convex end portion 28 of vacuum head 24 sits just above the lens. Vacuum head 24 mirrors the movements of the end portion. As the bottom of mold 4 is displaced upwards, vacuum head 24 moves upwards, and as the bottom of mold 4 moves downwards, vacuum head 24 moves downwards. Consequently, the distance between lens 2 and vacuum head 24 remains substantially constant during a cycle. The resilient end portion 28 of the vacuum head accommodates any misalignment as the vacuum head moves in synch with the reciprocating member, thereby reducing the risk of damage to the lens. This cycle is repeated, with the distance moved by member 18 (and therefore suction head 24) in each cycle increasing with time until an edge of lens 2 lifts from mold 4. During the movement of reciprocating member 18, air vents 29 direct gas towards the edge of the lens, which accelerates the process of detachment once the edge of lens 2 has lifted. Once lens 2 is detached, the negative pressure generated by vacuum port 26 holds lens 2 in contact with vacuum head 24.

FIG. 2 shows a plan view of lens 2 when clamping plate 14 is in place. Plate 14 defines a circular aperture 16 through which lens 2 is visible. An optical region 2a of the lens, which appears circular when viewed in plan, is located in the center of lens 2 and is surrounded by an annular peripheral region 2b. Circular dashed line 30 denotes the outer circumference of end portion 22 when in contact with the mold. End portion 22 appears circular when viewed in plan in this figure. The outer circumference of end portion 22, as shown by line 30 in FIG. 2, is outside optical region 2a. Circular dashed line 32 denotes the outer circumference of flange 8 of mold portion 4. The radius of mold portion 4 is greater than the radius of circular aperture 16 and therefore line 32 is located radially outside the aperture.

In use, the outer edge of end portion 22, as denoted by dashed line 30, and aperture 16 as delimited by plate 14 (edge portion 14a defines the edge of aperture 16), define an annular region of the mold portion. When the center of mold portion 4 is moved by end portion 22, the annulus is repeatedly stretched and then allowed to relax by the cooperating action of reciprocating member 18 and clamp 14. As the annulus is stretched, the edge of lens 2 lifts from mold portion 4.

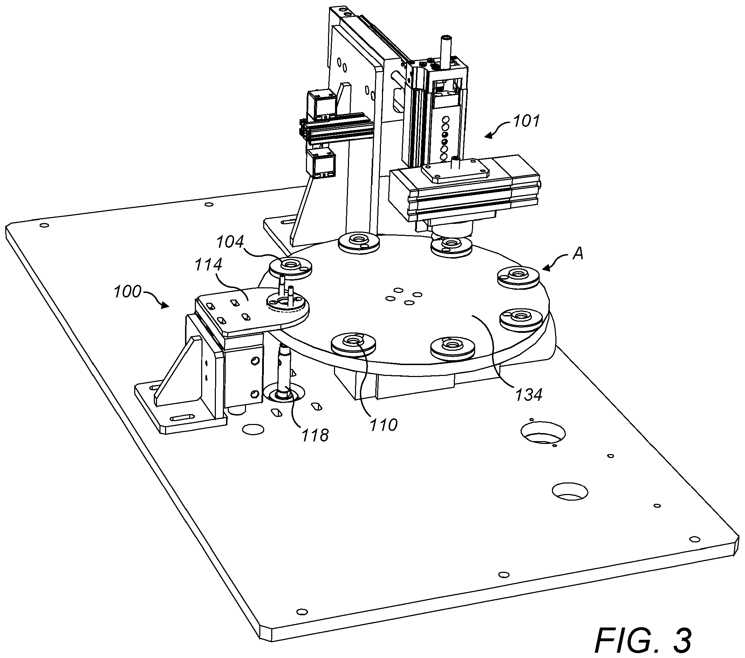

FIG. 3 shows a delensing station 100 adjacent to a circular turntable 134 that contains a plurality of circumferentially spaced recesses 110 in which mold portions 104 are located. In FIG. 3, a clamp 114 is shown clamping a mold portion 104 at delensing station 100. A reciprocating member 118 can be seen beneath turntable 134. Also located adjacent to the turntable is a demolding station 101 which is spaced apart from delensing station 100 around the circumference of the turntable 134. A lens pallet (not shown) containing a plurality of recesses is located adjacent to delensing station 100.

In use, mold assemblies 104, each containing a cured lens (not shown), are deposited in respective recesses 110 at location A. The turntable 134 then rotates counterclockwise until recess 110 is aligned with demolding station 101. The mold assembly is then separated and concave mold portion 104 carrying the lens remains in recess 110 while the convex mold portion (not shown) is removed. The turntable 134 then rotates counterclockwise until recess 110 is aligned with delensing station 100.

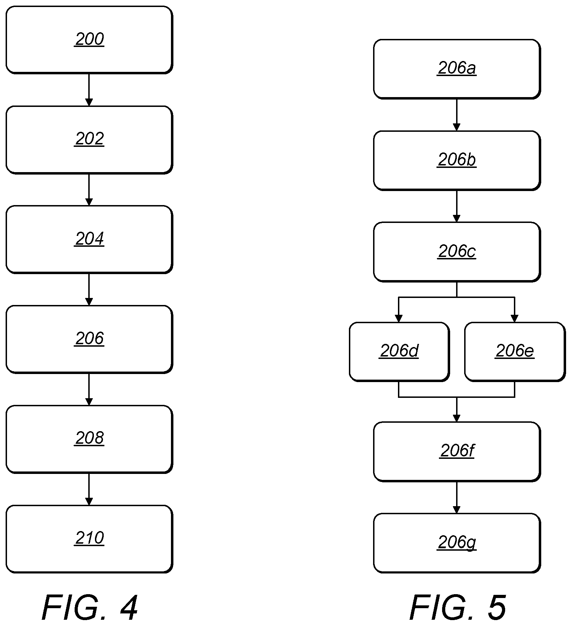

FIG. 4 shows a flow chart of the manufacturing process. The process comprises a step 200 of providing a mold assembly containing lens precursor material, a curing step 202, a mold separation step (demolding step) 204, a step 206 of removing the lens from the mold (delensing step), a hydrating step 208, and a packaging step 210.

FIG. 5 shows a flow chart of the method for removing a contact lens from a mold portion, according to the present invention. With reference also to FIG. 3, first, lens carrying mold portion 104 is aligned in step 206a with reciprocating member 118 of delensing station 100 by rotation of turntable 134. Mold portion 104 is clamped in step 206b, in position, by clamp 114. The vacuum head is aligned in step 206c with mold portion 104. Reciprocating member 118 and the vacuum head then move synchronously in step 206d. The synchronous reciprocal movement in step 206d continues until the annulus of mold portion 104 (see FIG. 2) is sufficiently stretched so that an edge portion of lens 102 detaches in step 206e from mold 104. During and after the synchronous movement in step 206d, air blowers direct air in step 206e under the edge of lens 102, increasing the separation between lens 102 and mold 104. Once the lens is sufficiently detached, it is lifted in step 206f from the mold by the vacuum head. The robotic arm then moves the vacuum head carrying lens 102 to a recess in the lens pallet and deposits lens 102 therein in step 206g. Once full, the lens pallet can be moved to another station for further processing.

While the present invention has been described and illustrated with reference to particular embodiments, it will be appreciated by those of ordinary skill in the art that the invention lends itself to many different variations not specifically illustrated herein.

For example, although in the example embodiment described above only one reciprocating member 18 is provided, in alternative example embodiments a plurality of reciprocating members are provided, allowing delensing of lenses from a plurality of lens mold portions simultaneously.

Where, in the foregoing description, integers or elements are mentioned which have known, obvious, or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient, or the like, are optional and do not limit the scope of the independent claims.

## Claims

1. A method of removing a contact lens (2) from a lens mold portion (4) carrying a contact lens (2), the method comprises reciprocally displacing a region of the mold portion (2) with a reciprocating member (18) **characterized in that** the reciprocating member (18) comprises a non-planar end portion shaped to complement the mold portion and the reciprocating member (18) being arranged such that in use the end portion contacts the center of the mold portion, to thereby cause an edge portion of the contact lens (2) to become detached from the mold portion (4), wherein the reciprocal displacement comprises a plurality of cycles, each cycle comprising motion in a first direction, followed by motion in a second, opposite direction.

2. The method according to claim 1, further comprising varying the amplitude of the reciprocal displacement with respect to time.

3. The method according to any preceding claim, further comprising moving a suction head synchronously with the reciprocal motion of the mold portion.

4. The method according to any preceding claim, further comprising blowing gas towards the edge portion of the ophthalmic lens.

5. A method of manufacturing a contact lens using lens mold portions, the method comprising removing the contact lens from a lens mold portion in accordance with the method of one of claims 1 to 4.

6. An apparatus for removing a contact lens (2) from a lens mold portion (4), wherein the apparatus comprises
a reciprocating member (18), **characterized in that** the reciprocating member (18) comprising a non-planar end portion shaped to complement the lens mold portion, and **in that** the apparatus further comprises a platform (12) for retaining the lens mold portion (4), the reciprocating member (18) being arranged such that in use the end portion contacts the center of the mold portion to reciprocally displace a region of said lens mold portion (4) when the lens mold portion (4) is retained by the platform (12), wherein the reciprocal displacement comprises a plurality of cycles, each cycle comprising motion in a first direction, followed by motion in a second, opposite direction.

7. The apparatus according to claim 6, further comprising a clamp arranged and configured such that, in use, the clamp acts on an outer circumference of the mold portion.

8. An apparatus according to claim 7, wherein the clamp defines a circular aperture, and the end portion of the reciprocating member and the circular aperture define an annulus on the mold portion.

9. The apparatus according to claim 8, wherein the annulus is outside an optic portion of the mold portion.

10. The apparatus according to any of claims 6 to 9, further comprising a suction head, wherein the suction head is arranged and configured such that, in use, the suction head is located on a side of the mold portion opposite the reciprocating member and moves substantially synchronously with the reciprocating member.

11. The apparatus according to any of claims 6 to 10, further comprising a blower arranged to blow air towards an edge of a lens attached to the mold portion.

12. The apparatus according to any of claims 6 to 11, wherein the mold portion is a female mold portion and wherein the platform comprises a recess in which the female mold portion is supported.

13. A delensing station comprising an apparatus according to any of claims 6 to 12.

14. A manufacturing line for the production of contact lenses, comprising a delensing station according to claim 13.

## Patentansprüche

1. Verfahren zum Entfernen einer Kontaktlinse (2) aus einem Linsenformteil (4), der eine Kontaktlinse (2) trägt, wobei das Verfahren das reziproke Verlagern eines Bereichs des Formteils (2) mittels eines hin- und hergehenden Elements (18) umfasst, **dadurch gekennzeichnet, dass** das hin- und hergehende Element (18) ein nicht ebenes Endstück umfasst, das so geformt ist, dass es den Formteil komplementiert, und das hin- und hergehende Element (18) so angeordnet ist, dass, bei Gebrauch, das Endstück die Mitte des Formteils berührt, um zu bewirken, dass sich dadurch ein Randbereich der Kontaktlinse (2) vom Formteil (4) löst, wobei die reziproke Verlagerung eine Mehrzahl von Zyklen umfasst, wobei jeder Zyklus eine Bewegung in eine erste Richtung, gefolgt von einer Bewegung in eine zweite, entgegengesetzte Richtung umfasst.

2. Verfahren gemäß Anspruch 1, ferner umfassend das zeitliche Variieren der Amplitude der reziproken Verlagerung.

3. Verfahren gemäß einem vorhergehenden Anspruch, ferner umfassend das Bewegen eines Saugkopfes synchron mit der reziproken Bewegung des Formteils.

4. Verfahren gemäß einem vorhergehenden Anspruch, ferner umfassend das Blasen von Gas zum Randbereich der ophthalmischen Linse hin.

5. Verfahren zur Herstellung einer Kontaktlinse unter Verwendung von Linsenformteilen, wobei das Verfahren das Entfernen der Kontaktlinse aus einem Linsenformteil gemäß dem Verfahren nach einem der Ansprüche 1 bis 4 umfasst.

6. Vorrichtung zur Entfernung einer Kontaktlinse (2) aus einem Linsenformteil (4), wobei die Vorrichtung umfasst
ein hin- und hergehendes Element (18), **dadurch gekennzeichnet, dass** das hin- und hergehende Element (18) ein nicht ebenes Endstück umfasst, das so geformt ist, dass es den Linsenformteil komplementiert, und dass die Vorrichtung ferner eine Plattform (12) zum Halten des Linsenformteils (4) umfasst, wobei das hin- und hergehende Element (18) so angeordnet ist, dass, bei Gebrauch, das Endstück die Mitte des Formteils berührt, um einen Bereich des Linsenformteils (4) reziprok zu verlagern, wenn der Linsenformteil (4) durch die Plattform (12) gehalten wird, wobei das reziproke Verlagern eine Mehrzahl von Zyklen umfasst, wobei jeder Zyklus eine Bewegung in eine erste Richtung, gefolgt von einer Bewegung in eine zweite, entgegengesetzte Richtung umfasst.

7. Vorrichtung gemäß Anspruch 6, ferner umfassend eine Klemme, die so angeordnet und konfiguriert ist, dass, bei Gebrauch, die Klemme auf einen Außenumfang des Formteils wirkt.

8. Vorrichtung gemäß Anspruch 7, wobei die Klemme eine kreisförmige Öffnung abgrenzt und das Endstück des hin- und hergehenden Elements und die kreisförmige Öffnung einen Ringraum auf dem Formteil abgrenzen.

9. Vorrichtung gemäß Anspruch 8, wobei sich der Ringraum außerhalb eines optischen Teils des Formteils befindet.

10. Vorrichtung gemäß einem der Ansprüche 6 bis 9, ferner umfassend einen Saugkopf, wobei der Saugkopf so angeordnet und konfiguriert ist, dass, bei Gebrauch, der Saugkopf sich an einer Seite des Formteils gegenüber des hin- und hergehenden Elements befindet und sich im Wesentlichen synchron mit dem hin- und hergehenden Element bewegt.

11. Vorrichtung gemäß einem der Ansprüche 6 bis 10, ferner umfassend ein Gebläse, das so angeordnet ist, dass Luft zum Rand einer an den Formteil haftenden Linse hin geblasen wird.

12. Vorrichtung gemäß einem der Ansprüche 6 bis 11, wobei der Formteil ein weiblicher Formteil ist, und wobei die Plattform eine Ausnehmung umfasst, die den weiblichen Formteil trägt.

13. Entlinsungsstation, umfassend eine Vorrichtung gemäß einem der Ansprüche 6 bis 12.

14. Fertigungsstraße zur Herstellung von Kontaktlinsen, umfassend eine Entlinsungsstation gemäß Anspruch 13.

## Revendications

1. Procédé de retrait d'une lentille de contact (2) d'une portion de moule de lentille (4) portant une lentille de contact (2), le procédé comprenant le déplacement en va-et-vient d'une région de la portion de moule (2) avec un organe de déplacement en va-et-vient (18), **caractérisé en ce que** l'organe de déplacement en va-et-vient (18) comprend une portion d'extrémité non plane de forme complémentaire de la portion de moule et l'organe de déplacement en va-et-vient (18) est agencé de sorte que, en utilisation, la portion d'extrémité vienne au contact du centre de la portion de moule, pour amener de ce fait une portion de bord de la lentille de contact (2) à se désolidariser de la portion de moule (4), dans lequel le déplacement en va-et-vient comprend une pluralité de cycles, chaque cycle comprenant un mouvement dans une première direction, suivi d'un mouvement dans une seconde direction opposée.

2. Procédé selon la revendication 1, comprenant en outre la variation de l'amplitude du déplacement en va-et-vient dans le temps.

3. Procédé selon l'une quelconque des revendications précédentes, comprenant en outre le déplacement d'une tête d'aspiration de manière synchrone avec le mouvement en va-et-vient de la portion de moule.

4. Procédé selon l'une quelconque des revendications précédentes, comprenant en outre le soufflage d'un gaz vers la portion de bord de la lentille ophtalmique.

5. Procédé de fabrication d'une lentille de contact en utilisant des portions de moule de lentille, le procédé comprenant le retrait de la lentille de contact d'une portion de moule de lentille conformément au procédé selon l'une des revendications 1 à 4.

6. Appareil de retrait d'une lentille de contact (2) d'une portion de moule de lentille (4), dans lequel l'appareil comprend :
un organe de déplacement en va-et-vient (18), **caractérisé en ce que** l'organe de déplacement en va-et-vient (18) comprend une portion d'extrémité non plane de forme complémentaire de la portion de moule de lentille, et **en ce que** l'appareil comprend en outre une plate-forme (12) pour retenir la portion de moule de lentille (4),
l'organe de déplacement en va-et-vient (18) étant agencé de sorte que, en utilisation, la portion d'extrémité vienne au contact du centre de la portion de moule pour déplacer en va-et-vient une région de ladite portion de moule de lentille (4) lorsque la portion de moule de lentille (4) est retenue par la plate-forme (12), dans lequel le déplacement en va-et-vient comprend une pluralité de cycles, chaque cycle comprenant un mouvement dans une première direction, suivi d'un mouvement dans une seconde direction opposée.

7. Appareil selon la revendication 6, comprenant en outre un collier de serrage agencé et configuré de sorte que, en utilisation, le collier de serrage agisse sur une circonférence extérieure de la portion de moule.

8. Appareil selon la revendication 7, dans lequel le collier de serrage définit une ouverture circulaire, et la portion d'extrémité de l'organe de déplacement en va-et-vient et l'ouverture circulaire définissent un anneau sur la portion de moule.

9. Appareil selon la revendication 8, dans lequel l'anneau est à l'extérieur d'une portion optique de la portion de moule.

10. Appareil selon l'une quelconque des revendications 6 à 9, comprenant en outre une tête d'aspiration, dans lequel la tête d'aspiration est agencée et configurée de sorte que, en utilisation, la tête d'aspiration soit située sur un côté de la portion de moule à l'opposé de l'organe de déplacement en va-et-vient et se déplace sensiblement de manière synchrone avec l'organe de déplacement en va-et-vient.

11. Appareil selon l'une quelconque des revendications 6 à 10, comprenant en outre une soufflante agencée pour souffler de l'air vers un bord d'une lentille solidarisée à la portion de moule.

12. Appareil selon l'une quelconque des revendications 6 à 11, dans lequel la portion de moule est une portion de moule femelle et dans lequel la plate-forme comprend un évidement dans lequel la portion de moule femelle est supportée.

13. Station de retrait de lentille comprenant un appareil selon l'une quelconque des revendications 6 à 12.

14. Chaîne de fabrication pour la production de lentilles de contact, comprenant une station de retrait de lentille selon la revendication 13.
